# DEMANDE DE BREVET EUROPEEN

(11) **EP 2 168 833 A1**
(43) Date de publication de la demande: **31.03.2010**
(21) Numéro de dépôt: 09171119.2
(22) Date de dépôt: 23.09.2009
(51) Int. Cl.: B60W 30/18, B60K 28/16, B60W 40/12

(54) **Procédé et dispositif de protection d'un organe de transmission du couple moteur aux roues d'un véhicule automobile**

(30) Priorité: 25.09.2008 FR 0856433
(71) Demandeur: Peugeot Citroën Automobiles SA, 78140 Vélizy-Villacoublay (FR)
(72) Inventeur: Chariou, Hervé, 78220 Viroflay (FR)

(57) **Abrégé**

L'invention concerne un procédé et un dispositif de protection d'un organe de transmission du couple moteur (Cmot) aux roues d'un véhicule automobile.

Ce procédé est **caractérisé en ce qu**'au moins un paramètre relatif audit organe et représentatif des conditions de sollicitation à un instant donné dudit organe est pris en compte pour effectuer l'étape de réduction du couple moteur (Cmot).

Avantageusement, le paramètre ou un des paramètres pris en compte est la température estimée ou mesurée du lubrifiant dudit organe de transmission.

L'invention concerne en outre un organe de transmission et une transmission de véhicule automobile.

Application dans le domaine des véhicules automobiles.

## Description

La présente invention concerne le domaine des transmissions d'un véhicule automobile, par exemple des transmissions automatiques avec une boîte de vitesses mécanique pilotée (BVMP) ou une boîte de vitesses automatique (BVA) ou une transmission à boîte de vitesses manuelle.

Plus particulièrement, la présente invention concerne la protection d'un organe de transmission, par exemple un différentiel disposé entre la boîte de vitesses et les demi-arbres de transmission aux roues motrices.

La présente invention va être ci-après décrite avec un organe de transmission sous la forme d'un différentiel. Il est entendu que cela n'a pas un caractère limitatif pour celle-ci.

Il est connu d'utiliser dans une transmission de véhicule automobile un différentiel permettant d'assurer une vitesse de rotation différente des roues d'un même essieu, ce qui est particulièrement indispensable lorsque le véhicule est conduit dans un virage. Un tel différentiel a pour fonction de permettre à deux roues motrices opposées d'un véhicule de tourner à des vitesses différentes dans les courbes ou les virages.

Un différentiel est caractérisé par un profil de sollicitations en vitesse, glissement et couple au niveau de son entrée, par exemple sa couronne d'entrée. Il peut ainsi se gripper dans le cas d'une sollicitation trop forte exercée sur lui.

Cela peut se produire par exemple quand le véhicule automobile est doté d'un dispositif d'anti-patinage à la traction, par exemple un système connu sous le nom d'ASR. Un tel système permet d'éviter l'anti-patinage des roues par un dispositif électronique permettant de réduire voire de supprimer le patinages des roues motrices en agissant sur les freins et éventuellement sur la gestion moteur. Dans un tel cas, comme l'action d'un tel dispositif d'anti-patinage sur le différentiel est forte, celui-ci peut se gripper mécaniquement sous cette action. Ceci nécessite une protection pour le différentiel.

Un phénomène de grippage de l'organe de transmission, quand il est lubrifié, peut se produire notamment à froid suite à la dégradation de la viscosité de l'huile ou, au contraire, à haute température de l'huile, par centrifugation de l'huile devenue alors très fluide.

Ce phénomène apparaît, par exemple, en cas de faible adhérence des roues motrices avec la chaussée, notamment en cas de neige ou de glace, la force de propulsion ou de traction du véhicule étant déterminée par l'adhérence de la roue qui patine. Pour assurer le déplacement du véhicule, le conducteur ou le dispositif d'anti-patinage, s'il est présent, va freiner cette roue ce qui va augmenter le couple de traction de l'autre roue par action du différentiel. Cette action de freinage permet un blocage du différentiel comparable à l'action produite par un autobloquant mécanique mais elle vient solliciter le différentiel en augmentant le couple sous glissement.

Pour résoudre ce problème, il a été proposé de protéger le différentiel en provoquant de façon préventive une réduction du couple moteur au niveau de la couronne du différentiel de façon à rester dans le domaine de validation du différentiel. Cette réduction de couple ne prend pas en compte les paramètres représentatifs de la sollicitation imposée au différentiel à un instant donné. Ainsi, cette réduction de couple peut être déclenchée sans qu'elle soit nécessaire ou être excessive et pénaliser inutilement le conducteur déjà dans une situation difficile.

Le document EP-A-1 227 376 présente un procédé de prévention d'une surcharge d'un organe mécanique d'une transmission. Des paramètres de fonctionnement sont mesurés et transmis à un calculateur pour leur traitement et la surveillance d'une surcharge de cet organe. Les exemples donnés dans ce document sont relatifs à une pompe à lubrifiant fortement sollicitée pendant la marche de la transmission et le problème de ce document n'est pas relatif à des différences de glissement entre roues motrices d'un véhicule pouvant entraîner le grippage d'un organe de transmission.

Le document FR-A- 2 879 516 décrit un procédé de contrôle de saturation du couple moteur dans le cas d'une transmission infiniment variable. Cette saturation se produit quand le couple demandé sur le vilebrequin est supérieur au couple maximal autorisé. Ce document n'est pas non plus concerné par le problème de la présente invention mais plutôt par la protection du moteur d'un véhicule automobile.

Le document EP-B-0 137 247 présente un dispositif de protection contre une éventuelle surchauffe de l'embrayage d'un véhicule. Les vitesses en entrée et en sortie de cet embrayage sont transmises et comparées dans un calculateur avec émission d'un signal d'alarme. Ce document ne décrit ni ne suggère une quelconque solution au problème de la présente invention.

La présente invention a pour but de protéger un organe de transmission par réduction du couple moteur au niveau de celui-ci, cette réduction étant contrôlée selon un ou des paramètres de fonctionnement de l'organe de transmission afin d'obtenir une réponse de protection adaptée à la sollicitation imposée à cet organe de transmission à un instant donné.

A cet effet, l'invention a pour objet un procédé de protection d'un organe de transmission contre une trop forte sollicitation exercée sur celui-ci, ledit organe étant, d'une part, relié à l'arbre moteur d'un véhicule automobile et, d'autre part, intercalé entre les demi-arbres de transmission aux roues d'un même essieu, ce procédé présentant une étape de réduction du couple moteur transmis audit organe lorsque la différence des vitesses angulaires de chaque demi-arbre de transmission aux roues dépasse une valeur prédéterminée, **caractérisé en ce qu**'au moins un paramètre relatif audit organe et représentatif des conditions de sollicitation à un instant donné dudit organe est pris en compte pour effectuer l'étape de réduction du couple moteur.

Selon des caractéristiques additionnelles de la présente invention :
- la réduction du couple moteur est proportionnelle à la différence desdites vitesses angulaires,
- le paramètre ou un des paramètres pris en compte est la température estimée ou mesurée du lubrifiant dudit organe de transmission,
- le procédé comprend une étape de mesure de l'angle au volant du véhicule automobile, la différence des vitesses angulaires de chaque demi-arbre de transmission étant alors corrigée par un facteur tenant compte de l'angle au volant ou l'étape de réduction du couple moteur n'étant pas appliquée à l'organe de transmission quand cet angle dépasse une valeur prédéterminée.

L'invention concerne également un dispositif pour la mise en oeuvre d'un tel procédé, **caractérisé en ce qu**'il comprend des moyens de mesure ou de modélisation des vitesses de chaque demi-arbre de transmission aux roues, des moyens de mesure ou de modélisation d'au moins un paramètres relatif audit organe et représentatif des conditions de fonctionnement de celui-ci et un calculateur traitant les informations données par lesdits moyens de mesure ou de modélisation.

L'invention concerne, de plus, un organe de transmission relié, d'une part, à l'arbre moteur d'un véhicule automobile et intercalé, d'autre part, entre les demi-arbres de transmission aux roues d'un même essieu du véhicule, **caractérisé en ce qu**'il est protégé par un tel procédé et/ou en ce qu'il comprend un tel dispositif de protection.

Avantageusement, l'organe de transmission est un différentiel.

L'invention concerne, de plus, une transmission comprenant une boîte de vitesses manuelle ou automatique, caractérisée en ce qu'elle comprend au moins un tel organe de transmission.

Avantageusement, quand la boîte de vitesses est une boîte de vitesses automatique, le calculateur du dispositif de protection est inclus dans le calculateur de transmission de ladite boîte de vitesses.

Avantageusement, quand la boîte de vitesses automatique est une boîte de vitesses mécanique pilotée, la stratégie de ladite boîte de vitesses est modifiée pour permettre la réduction du couple moteur autrement que lors d'un changement de rapport de vitesses.

L'invention concerne enfin un véhicule automobile **caractérisé en ce qu**'il comprend une telle transmission.

L'effet technique obtenu est la modulation de la protection de l'organe de transmission par réduction du couple moteur en fonction d'un ou de paramètres de fonctionnement de l'organe de transmission, notamment d'un ou de paramètres relatifs au lubrifiant de l'organe de transmission, ce ou ces paramètres pouvant être modélisés ou mesurés.

La protection de l'organe de transmission sera alors adaptée aux évolutions de ce ou ces paramètres.

L'invention va maintenant être décrite plus en détail mais de façon non limitative en regard des figures annexées, dans lesquelles :
- la figure 1 est une représentation schématique en perspective d'un exemple de différentiel, illustrant l'organe de transmission selon la présente invention,
- la figure 2 montre, dans le cas d'une transmission à boîte de vitesses automatique, les courbes illustrant la réduction de couple moteur permettant une protection active de l'organe de transmission selon la présente invention.

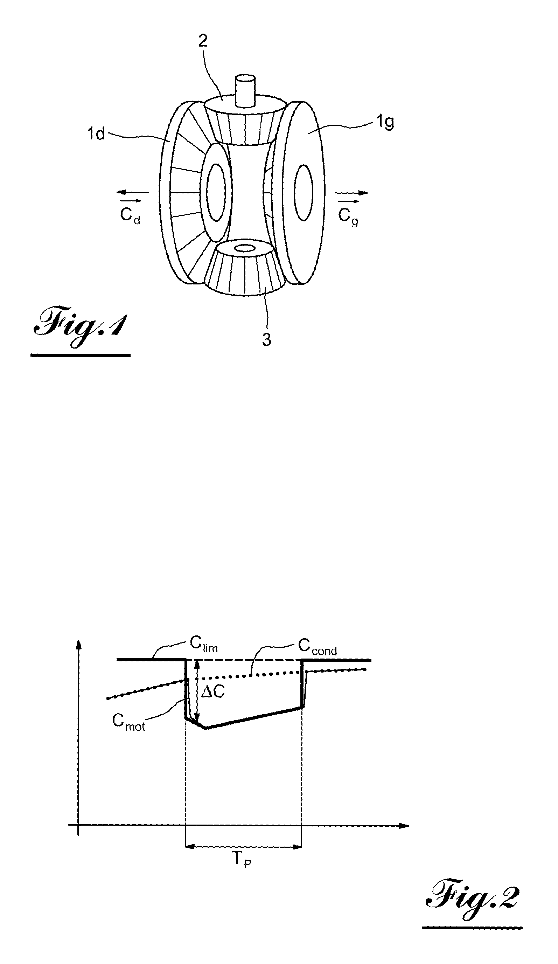

La figure 1 illustre un exemple classique d'un organe de transmission de couple pour un véhicule automobile.

Cet organe de transmission est sous la forme d'un différentiel permettant aux roues motrices de tourner à des vitesses différentes et comprenant un ensemble de pignons contenus dans un boîtier entraîné en rotation, ce boîtier étant non représenté à cette figure de même que son mécanisme d'entraînement, en général une couronne de pont.

Ce différentiel se compose donc de quatre pignons coniques engrenant ensemble et disposés deux à deux sur des axes perpendiculaires. L'un de ces axes est solidaire du boîtier du différentiel et porte les pignons 2 et 3 appelés pignons satellites. Les deux autres pignons 1d et 1g, appelés pignons planétaires, sont fixés respectivement sur le demi-arbre droit ou gauche qui transmet le couple à la roue motrice respective droite ou gauche, indiqué par les couples respectifs Cd et Cg.

Si la voiture roule en ligne droite, les roues motrices droite et gauche parcourent le même trajet et tournent donc à la même vitesse angulaire wd ou wg. Les pignons planétaires 1d et 1g vont de ce fait tourner également à la même vitesse et les pignons satellites 2 et 3, soumis à des forces opposées de même valeur absolue de la part de ces pignons planétaires 1d et 1g, vont rester immobiles autour de leur axe.

Si la voiture aborde un virage ou si l'une des roues motrices droite ou gauche rencontre une résistance quelconque, les efforts résistants appliqués aux deux roues seront inégaux.

Par exemple, si la roue montée sur le demi-arbre gauche se trouve à l'extérieur du virage, le pignon planétaire gauche 1g tourne plus vite en vitesse angulaire wg que le pignon planétaire 1d et entraîne les pignons satellites 2 et 3 dans un mouvement de rotation autour de leur axe. Ce mouvement va diminuer la vitesse angulaire wd du pignon planétaire droit 1d et, en conséquence, la vitesse de la roue montée sur ce demi-arbre droit.

Ainsi dans un différentiel, la moyenne des vitesses angulaires wd et wg des demi-arbres est égale à la vitesse d'entraînement de ce différentiel, par exemple par la couronne de pont.

Pour compenser le désavantage du différentiel, apparaissant notamment sur sols glissants, il existe une possibilité de blocage mécanique de celui-ci. Ceci est obtenu en rendant les pignons planétaires 1d et 1g solidaires du boîtier du différentiel, ces planétaires tournant ainsi à la même vitesse. Ce blocage mécanique peut s'effectuer par différents moyens, par exemple des cannelures portées par les demi-arbres sur lesquelles coulisse un crabot s'engageant dans le boîtier du différentiel, par des roues libres ou des embrayages à disques placés entre les pignons planétaires et le boîtier de différentiel.

D'autres conceptions de différentiel sont aussi possibles que celui montré précédemment juste à titre d'exemple. On pourra citer, sans être exhaustif, le différentiel à glissement limité mécanique, utilisant ou non une vis sans fin, le différentiel avec un système à glissement limité placé en amont de celui-ci, le différentiel piloté, notamment le différentiel asymétrique piloté ou l'organe de transmission à frottement visqueux.

Comme précédemment indiqué, la présente invention vise à une protection de l'organe de transmission lors d'une sollicitation trop forte de celui-ci du fait soit du conducteur, soit d'un système électronique d'aide à la conduite.

En effet, en cas d'usage trop sévère de l'organe de transmission, celui-ci peut se gripper. Pour remédier à cela, il existe des dispositifs permettant, en cas de différence de glissement entre les roues motrices, de réduire le couple moteur au niveau de la couronne du différentiel. Ces dispositifs n'existent cependant que pour des boîtes de vitesses automatiques et ne prennent pas en compte la sollicitation imposée effectivement à l'organe de transmission à un instant donné.

Une telle réduction du couple moteur permet de limiter les efforts exercés au niveau de l'organe de transmission pour rester dans le domaine de sollicitation utilisé en validation mécanique de celui-ci.

Pour améliorer la protection de l'organe de transmission, selon la présente invention, cette protection sera mise en oeuvre si elle est confirmée par un ou des paramètres de fonctionnement de l'organe. Ceci sera expliqué ultérieurement.

Le principe de la réduction de couple sera mieux compris à la figure 2.

A cette figure, la courbe supérieure Clim montre la limitation du couple obtenu en boîte de vitesses automatique.

La courbe Ccond illustre le couple moteur demandé par le conducteur tandis que la courbe Cmot montre le couple effectivement délivré par le moteur.

En cas de différence anormale de vitesse angulaire des deux demi-arbres droit et gauche, par exemple quand cette différence est supérieure au maximum possible en virage, le couple moteur Cmot est limité de façon à réduire le couple au niveau de l'organe de transmission et donc, par conséquent, le couple en sortie de l'organe de transmission au niveau des demi-arbres de transmission des roues motrices. La différence ΔC est la réduction effective entre le couple Clim déterminé lors du fonctionnement normal de la transmission, par exemple par la boîte de vitesse automatique BVA ou la boîte de vitesses mécanique pilotée BVMP, et le couple Cmot obtenu après correction pour la protection de l'organe de transmission.

Dans le cas d'une boîte de vitesses automatique, ce qui n'est pas forcément le cas, étant donné que la présente invention s'applique aussi à une boîte de vitesses manuelle, cette réduction du couple moteur est demandée au calculateur de contrôle moteur par le calculateur de transmission de la boîte automatique, par exemple celui de la BVA ou de la BVMP. Cette réduction est calculée en dépendance du glissement effectif entre les demi-arbres de transmission aux roues.

Une telle transmission automatique sélectionne, sans intervention obligatoire du conducteur, le rapport approprié en fonction d'un certain nombre de paramètres comme le régime moteur, la vitesse du véhicule et la position de l'accélérateur. Il existe plusieurs solutions techniques pour réaliser une transmission automatique : boîte automatique à trains épicycloïdaux et convertisseur de couple hydraulique, boîte automatique auto adaptative, boîte mécanique pilotée (BVMP), etc.

Une boîte de vitesses mécanique pilotée se caractérise par une gestion électronique de l'embrayage et du passage des rapports. Dans le cas spécifique de cette boîte de vitesses mécanique pilotée, comme la réduction de couple moteur est, en principe, demandée uniquement lors d'un changement de rapport, la stratégie de ce type de boîte pourra être changée en conséquence afin d'étendre cette possibilité hors changement de rapport et de permettre d'effectuer la protection de l'organe de transmission, conformément à la présente invention.

Dans le cas d'une boîte de vitesses manuelle, c'est avantageusement le contrôle moteur qui effectue cette réduction de couple après comparaison et, le cas échéant, correction de la différence des vitesses angulaires des demi-arbres de roue droite et gauche.

Soit wd et wg la vitesse angulaire respective de chacun des demi-arbres de transmission aux roues motrices droite et gauche,
Cmot le couple moteur délivré au niveau de la couronne de pont en fonction du rapport de démultiplication et de l'état du convertisseur en BVA,
si la valeur absolue de Δ(wd-wg) est supérieure à une valeur prédéterminée, alors le couple moteur Cmot est réduit à l'entrée de l'organe de transmission, par exemple, de façon proportionnelle au glissement se produisant dans cet organe.

La mesure de la vitesse angulaire de chaque demi-arbre de roue peut être effectuée par un capteur spécifique au niveau de ce demi-arbre.

Cette différence de vitesses angulaires peut être corrigée par un coefficient en fonction de la situation du véhicule en ligne droite ou en virage. En effet, une différence de vitesse est normale en virage, étant donné que c'est la fonction même du différentiel de permettre une telle différence. Cette denière peut, dans ce cas, ne pas être obligatoirement corrigée ou sa correction peut être atténuée. La reconnaissance de la situation du véhicule peut être effectuée en utilisant le capteur d'angle au volant pour déterminer si le véhicule est en virage ou non et ne pas appliquer ou atténuer la limitation de couple moteur lorsque celui-ci est effectivement en virage.

Une caractéristique importante de la présente invention est en ce qu'au moins un paramètre relatif audit organe et représentatif des conditions de sollicitation à un instant donné dudit organe est pris en compte pour effectuer l'étape de réduction du couple moteur.

Ainsi, en plus d'une réduction du couple moteur selon une différence de vitesses angulaires des roues motrices droite et gauche, avec, le cas échéant, une correction fonction de l'angle au volant, le procédé de la présente invention prend en compte au moins un paramètre de fonctionnement de l'organe de transmission pour effectuer ou non cette correction.

Ce paramètre peut concerner le lubrifiant à l'intérieur de l'organe de transmission, notamment sa température et/ou sa viscosité. Ce ou ces paramètres peuvent être modélisés ou mesurés selon les circonstances.

Par exemple, la température du lubrifiant de l'organe de transmission pourra être mesurée par un capteur de température, disposé dans cet organe, ou modélisée dans un calculateur, par exemple avantageusement, pour les boîtes de vitesses automatiques, le calculateur assurant le contrôle de la transmission ou, pour une boîte de vitesses manuelle, le contrôle moteur lui-même assurant ce contrôle.

La modélisation de la température de lubrifiant peut s'effectuer de manière déjà connue pour la protection thermique d'une boîte de vitesses. Par exemple, la température peut être estimée à partir de la capacité thermique de l'organe de transmission et d'au moins une quantité de chaleur transmise par le moteur à cet organe et/ou la température peut être estimée au moyen d'un modèle numérique qui simule une évolution de température de l'organe de transmission en fonction de paramètres préalablement mémorisés à partir d'un calibrage de prototype et en fonction d'un régime de fonctionnement en temps réel du véhicule.

Ainsi une protection de l'organe de transmission peut être limitée au juste nécessaire en fonction des évolutions des caractéristiques du lubrifiant de transmission et notamment de sa température.

L'avantage est ainsi de ne pas limiter le couple moteur au-delà du nécessaire et donc de permettre au conducteur d'utiliser la motricité nécessaire pour la conduite de son véhicule.

Une application toute particulière de la présente invention est pour les BVMP, notamment en association avec un système électronique d'anti-patinage des roues du type ASR. La régulation anti-patinage ASR agit sur les freins, via la centrale ABS du système d'antiblocage des roues et aussi sur la gestion du moteur en coupant l'alimentation. Elle fonctionne en association avec la commande électronique d'accélérateur et utilise les composants de l'ABS.

La présente invention peut trouver une application aussi bien pour les véhicules 4.4 ou les véhicules à deux roues motrices.

L'invention n'est nullement limitée au mode de réalisation décrit et illustré qui n'a été donné qu'à titre d'exemple.

## Revendications

1. Procédé de protection d'un organe de transmission contre une trop forte sollicitation exercée sur celui-ci, ledit organe étant, d'une part, relié à l'arbre moteur d'un véhicule automobile et, d'autre part, intercalé entre les demi-arbres de transmission aux roues d'un même essieu, ce procédé présentant une étape de réduction du couple moteur (Cmot) transmis audit organe lorsque la différence des vitesses angulaires (wd et wg) de chaque demi-arbre de transmission aux roues dépasse une valeur prédéterminée, **caractérisé en ce qu'**au moins un paramètre relatif audit organe et représentatif des conditions de sollicitation à un instant donné dudit organe est pris en compte pour effectuer l'étape de réduction du couple moteur.

2. Procédé selon la revendication précédente, **caractérisé en ce que** la réduction du couple moteur (Cmot) est proportionnelle à la différence desdites vitesses angulaires (wd et wg).

3. Procédé selon l'une quelconque des revendications 1 ou 2, **caractérisé en ce que** le paramètre ou un des paramètres pris en compte est la température estimée ou mesurée du lubrifiant dudit organe de transmission.

4. Procédé selon l'une quelconque des revendications précédentes, **caractérisé par** une étape de mesure de l'angle au volant du véhicule automobile, la différence des vitesses angulaires (wd et wg) de chaque demi-arbre de transmission étant alors corrigée par un facteur tenant compte de l'angle au volant ou l'étape de réduction du couple moteur (Cmot) n'étant pas appliquée à l'organe de transmission quand cet angle dépasse une valeur prédéterminée.

5. Dispositif pour la mise en oeuvre du procédé selon l'une quelconque des revendications précédentes, **caractérisé en ce qu'**il comprend des moyens de mesure ou de modélisation des vitesses angulaires (wd et wg) de chaque demi-arbre de transmission aux roues, des moyens de mesure ou de modélisation d'au moins un paramètre relatif audit organe et représentatif des conditions de fonctionnement de celui-ci et un calculateur traitant les informations données par lesdits moyens de mesure ou de modélisation.

6. Organe de transmission relié, d'une part, à l'arbre moteur d'un véhicule automobile et intercalé, d'autre part, entre les demi-arbres de transmission aux roues d'un même essieu du véhicule, **caractérisé en ce qu'**il est protégé par un procédé selon l'une quelconque des revendications 1 à 4 et/ou **en ce qu'**il comprend un dispositif de protection selon la revendication précédente.

7. Organe de transmission selon la revendication précédente, **caractérisé en ce qu'**il est un différentiel.

8. Transmission comprenant une boîte de vitesses manuelle ou automatique, **caractérisée en ce qu'**elle comprend au moins un organe de transmission selon l'une des revendications 6 ou 7.

9. Transmission selon la revendication 8, **caractérisée en ce que,** quand la boîte de vitesses est une boîte de vitesses automatique, le calculateur du dispositif de protection est inclus dans le calculateur de transmission de ladite boîte de vitesses.

10. Transmission selon la revendication 9, **caractérisée en ce que** quand la boîte de vitesses automatique est une boîte de vitesses mécaniquement pilotée, la stratégie de ladite boîte de vitesses est modifiée pour permettre la réduction du couple moteur (Cmot) autrement que lors d'un changement de rapport de vitesses.

11. Véhicule automobile **caractérisé en ce qu'**il comprend une transmission selon l'une quelconque des revendications 8 à 10.
